# EUROPEAN PATENT APPLICATION

(11) **EP 1 213 674 A2**
(43) Date of publication of application: **12.06.2002**
(21) Application number: 01128368.6
(22) Date of filing: 30.11.2001
(51) Int. Cl.: G06F 17/60

(54) **A consumable item providing system and a consumable item providing method**

(30) Priority: 05.12.2000 JP 2000370708
(71) Applicant: NEC CORPORATION, Tokyo (JP)
(72) Inventor: Yamamoto, Tetsuichiro, Minato-ku, Tokyo (JP)
(74) Representative: VOSSIUS & PARTNER

(57) **Abstract**

A consumable item providing system, includes: an information communicating unit (12); and a distributing unit (17) belonging to a consumable item dealer dealing a consumable item. The information communicating unit (12) automatically transmits an order of the consumable item through the Internet (14) when a consumptive amount of the consumable item consumed by the information communicating unit (12) is equal to or less than a reference value. The distributing unit (17) performs a process to distribute the consumable item to a transmission source of the order in response to the order. The information communicating unit (12) is one of a facsimile, a copier, a printer, and an office unit.

## Description

The present invention relates to a consumable item providing system and a consumable item providing method.

Conventionally, as a typical method of purchasing a supply or consumable item in a communicating unit and an information processor, each client considers a consumption degree of the consumable item and visits a shop dealing in it on each occasion in order to purchase it, or each client orders it by a telephone, a FAX or the like and then requests the shop to deliver it (Japanese Laid Open Patent Application (JP-A-Heisei 07-087212) and Japanese Laid Open Patent Application (JP-A-Heisei 2000-194767)). In this case, the service of the shop dealing in the consumable item on the providing side is limited to a provision of a service, such as a free dial system to save a telephone fee in ordering a consumable item from a client and the like, and a provision of a service of a periodical maintenance. Thus, in the former case, as an ordering action associated with a consumption of a dairy consumable item, there is only a manner that each client checks a consumptive amount of the consumable item and manages the amount by itself and purchases the consumable item prior to the exhaust of the consumable item, or each client purchase and holds a large amount of supplies in advance and thereby protects the consumable item from being exhausted. Hence, in this case, there may be a case that an improper order timing causes the consumable item to be exhausted, when it is needed. If a large amount of supplies are held and stored in a warehouse so as to protect it from being exhausted, this results in a problem that an economical efficiency becomes lower.

If the delivery of the consumable item is requested, a service is provided in which a maintainer checks the consumptive degree of the consumable item simultaneously with the periodical maintenance of the unit as that method, and then supplements it. However, a period of the periodical maintenance does not always agree with a consumption speed of the consumable item. So, this has a defect of an occurrence of a case that the consumable item can not be optimally provided.

Japanese Laid Open Patent Application (JP-A-Heisei, 8-167960) or Japanese Laid Open Patent Application (JP-A-Heisei, 7-87212) is proposed as a method of automatically detecting a reduction in a stock of a consumable item without a manual operation and then ordering it. They disclose the information with regard to a facsimile apparatus for automatically ordering the consumable item in a case of lack of it. This facsimile apparatus includes a measuring unit for automatically measuring a consumptive amount of each consumable item or a remaining amount thereof. Then, the consumable item is automatically ordered from the facsimile apparatus at a predetermined form, when an amount of each consumable item is less than a predetermined value, on the basis of the measured result by the measuring unit. In this case, a user of a facsimile need not take care of the amount of the consumable item. Thus, this case does not require an extra labor of the user. Also, it is not necessary to take care of a maintenance cycle of the maintainer. The lack of the stock is never induced, and it is not necessary to keep an excessive stock. However, the automatic order timing is rigidly determined on the basis a certain fixed value. So, if there are a time having many demands and a time having a few demands, it is necessary to adjust its fixed value for each occasion by coping with their times. Also, an operation after the consumable item dealer receives the FAX for the automatic order is not explained in particular, and the correspondence is entrusted to the consumable item dealer. If it is similar to the typical case, it is manually carried out. Hence, in a case of an order at a midnight or on a holiday or the like, the correspondence of the consumable item dealer is carried out on and after a next business day. Hence, this is not always efficient.

Japanese Laid Open Patent Application (JP-A-Heisei, 2000-194767) or Japanese Laid Open Patent Application (JP-A-Heisei, 2000-187698) discloses a technique of an automatic order using an E-mail although they have the similar assumption. An OA (Office Automation) unit connected to a network, which has a measuring unit for automatically measuring a consumptive amount of each consumable item or a remaining amount thereof compares a value determined on the basis of an information of each consumable item measured by the measuring unit and the like with a preset standard value, and automatically orders each consumable item on the basis of the condition. An ordering method is a facsimile apparatus or an E-mail. This case differs in the order using the E-mail from the above-mentioned case. Also, similarly to the above-mentioned case, this case has the effects that the lack of the stock is never induced and it is not necessary to keep the excessive stock. However, on the OA apparatus side, the automatic order timing is rigidly determined in accordance with a certain fixed value. Thus, it is necessary to adjust the fixed value by coping with the large and small demands. Also, an operation in the consumable item dealer after the order is not explained in particular. If it is similar to the typical case, this is not always efficient.

Moreover, Japanese Laid Open Patent Application (JP-A-Heisei, 11-352846) discloses a system for carrying out the automatic order by using a data communication through a host computer. Similarly to the above-mentioned case, this case has the effects that the lack of the stock is never induced and it is not necessary to keep the excessive stock. Also, a host computer management enables many units to be collectively managed. In a company having many units, it is expected to be very ineffective. However, the automatic order timing is rigidly determined in accordance with the fixed value with regard to the stock amount. Thus, it is not always that a flexible correspondence is carried out correspondingly to the situation of demand. Moreover, it is expected that a system configuration is large and a cost is high. The operation in the consumable item dealer after the order is not explained in particular. If it is similar to the typical case, this is not always efficient.

Japanese Patent Publication No.2869428 discloses the following business unit managing system. This business unit managing system is the business unit managing system, in which a single computing apparatus is connected to a plurality of business units and this computing apparatus can manage a usage situation of each business unit, wherein the business unit at least includes: a counter that can count a consumptive amount of a consumable item for each kind; and a memory that can store and update an output information from the counter and a date and hour of an arrival schedule of a previous order, and wherein the computing apparatus is provided with: a calculator having a function of storing various files containing a standard stock amount of a consumable item predetermined correspondingly to each business unit, and comparing an information given by the business unit with the standard stock amount when the date and hour of the arrival schedule of the previous order is equal to or elapses from a date and hour built in the computing apparatus, and then calculating the consumptive amount in the business unit; and a display that can indicate the usage situation of each busyness unit, on the basis of an output of the calculator.

The present invention is accomplished in view of the above mentioned problems.

An object of the present invention is to provide a system and a method, in which an information communicating unit of a client automatically judges an order time and an order amount of a consumable item on the basis of a consumptive situation of the consumable item, and then carries out the order through the Internet by itself.

Another object of the present invention is to provide a system and a method, in which for an order through the Internet from the information communicating unit of the client, a side of a consumable item dealer can basically receive the order at any time 24 hours a day.

Still another object of the present invention is to provide a system and a method, which can serve as a simple interface with regard to a consumable item business, in a client and a consumable item dealer.

In order to achieve an aspect of the present invention, a consumable item providing system includes: a consumptive amount calculating unit provided in a information communicating unit and having an initial information of an initial stock amount of a consumable item consumed by the information communicating unit and measuring a consumptive amount of the consumable item to calculate a current stock amount of the consumable item based on the initial stock amount and the consumptive amount; and a controlling unit responding to the current stock amount to output a consumable item information with regard to the consumable item when the current stock amount is equal to or less than a reference value.

In this case, the controlling unit estimates a consumptive amount of the consumable item, based on a consumptive amount information of the measured consumptive amount and the initial information and a time information corresponding to the measured consumptive amount and the initial stock amount to set the reference value based on the estimated consumptive amount.

Also in this case, the consumable item providing system, further includes: a communicating unit connected to the Internet transmitting and receiving the consumable item information.

Further in this case, the consumable item providing system further includes: a communicating unit connected to the Internet transmitting and receiving the consumable item information.

In order to achieve another aspect of the present invention, a consumable item providing system, includes: an information communicating unit; and a distributing unit belonging to a consumable item dealer dealing a consumable item, and wherein the information communicating unit automatically transmits an order of the consumable item through the Internet when a consumptive amount of the consumable item consumed by the information communicating unit is equal to or less than a reference value, and wherein the distributing unit performs a process to distribute the consumable item to a transmission source of the order in response to the order, and wherein the information communicating unit is one of a facsimile, a copier, a printer, and an office unit.

In this case, the information communicating unit includes: a consumptive amount calculating unit having an initial information of an initial stock amount of a consumable item consumed by the information communicating unit and measuring a consumptive amount of the consumable item to calculate a current stock amount of the consumable item based on the initial stock amount and the consumptive amount; a controlling unit responding to the current stock amount to output a consumable item information with regard to the consumable item when the current stock amount is equal to or less than a reference value; and a communicating unit connected to the Internet transmitting and receiving the consumable item information.

Also in this case, the controlling unit controls an amount of the consumable item of the order which is transmitted next, based on a previous order information of the order which is transmitted previously and the consumable item information.

Further in this case, the controlling unit estimates a consumptive amount of the consumable item, based on a consumptive amount information of the measured consumptive amount and the initial information and a time information corresponding to the measured consumptive amount and the initial stock amount to set the reference value based on the estimated consumptive amount.

In this case, the controlling unit estimates a consumptive amount of the consumable item, based on a consumptive amount information of the measured consumptive amount and the initial information and a time information corresponding to the measured consumptive amount and the initial stock amount to set the reference value based on the estimated consumptive amount.

Also in this case, the distributing unit always receives the order using the Internet without any temporal limitation.

Further in this case, the distributing unit always receives the order using the Internet without any temporal limitation.

In this case, the distributing unit always receives the order using the Internet without any temporal limitation.

Also in this case, the distributing unit always receives the order using the Internet without any temporal limitation.

Further in this case, the distributing unit always receives the order using the Internet without any temporal limitation.

In this case, a fee processor belonging to an Internet provider acts as a payer of a fee for the consumable item.

Also in this case, a fee processor belonging to an Internet provider acts as a payer of a fee for the consumable item.

Further in this case, a fee processor belonging to an Internet provider acts as a payer of a fee for the consumable item.

In this case, a fee processor belonging to an Internet provider acts as a payer of a fee for the consumable item.

In order to achieve still another aspect of the present invention, a consumable item providing method, includes: (a) providing a information communicating unit; (b) having an initial information of an initial stock amount of a consumable item consumed by the information communicating unit; (c) measuring a consumptive amount of the consumable item; (d) calculating a current stock amount of the consumable item based on the initial stock amount and the consumptive amount; (e) responding to the current stock amount to output a consumable item information with regard to the consumable item when the current stock amount is equal to or less than a reference value; and (f) connecting to the Internet to transmit and receive the consumable item information.

In this case, the consumable item providing method further includes: (g) estimating a consumptive amount of the consumable item, based on a consumptive amount information of the measured consumptive amount and the initial information and a time information corresponding to the measured consumptive amount and the initial stock amount; and (h) setting the reference value based on the estimated consumptive amount.

In order to achieve yet still another aspect of the present invention, a consumable item providing method, includes: (i) automatically transmitting an order of a consumable item consumed by an information communicating unit through the Internet when a consumptive amount of the consumable item is equal to or less than a specific value, and (j) performing a process to distribute the consumable item to a transmission source of the order in response to the order, and wherein the information communicating unit is one of a facsimile, a copier, a printer, and an office unit.

In this case, the information communicating unit includes: (k) having an initial information of an initial stock amount of the consumable item consumed by the information communicating unit; (l) measuring a consumptive amount of the consumable item; (m) calculating a current stock amount of the consumable item based on the initial stock amount and the consumptive amount; and (n) responding to the current stock amount to output the order when the current stock amount is equal to or less than a reference value.

Fig. 1 is a block diagram showing an information communicating unit of the present invention; and

Fig. 2 is a block diagram showing a distribution flow of the present invention.

An embodiment of a consumable item providing system of the present invention will be described below with reference to the attached drawings.

In this embodiment, a case in which a consumable item of an information communicating unit is ordered through the Internet to a consumable item dealer is described as an example. However, it can be applied to various units containing an OA unit needing a provision of the consumable item.

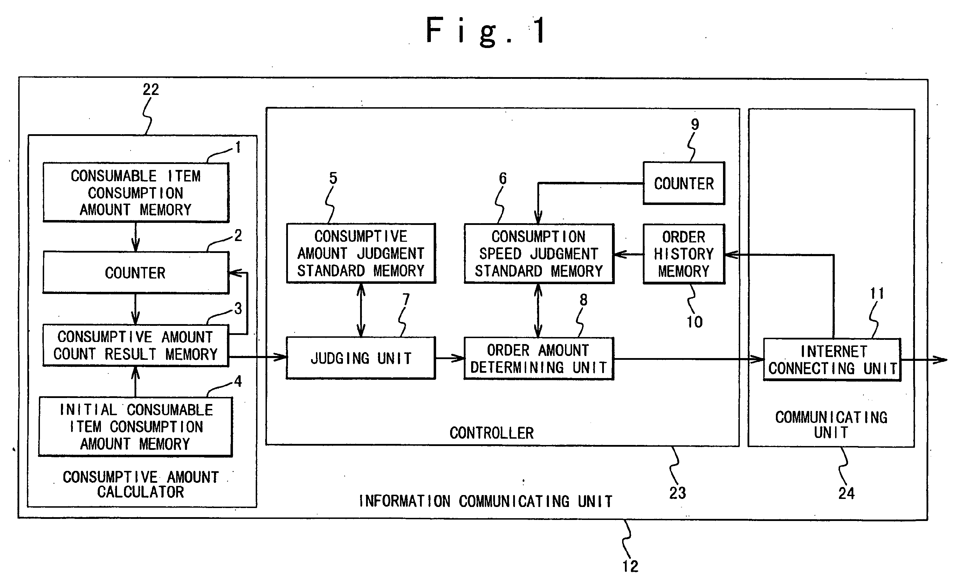

Fig. 1 is a block diagram showing an information communicating unit 12 serving as an apparatus, in the embodiment of the consumable item providing system of the present invention. The information communicating unit 12 is a facsimile, a copier or the like. It includes therein a consumptive amount calculator 22, a controller 23 and a communicating unit 24. The respective units can monitor and calculate the consumptive amounts of the respective supplies used in the information communicating unit 12 and can automatically order the supplies through the Internet as necessary.

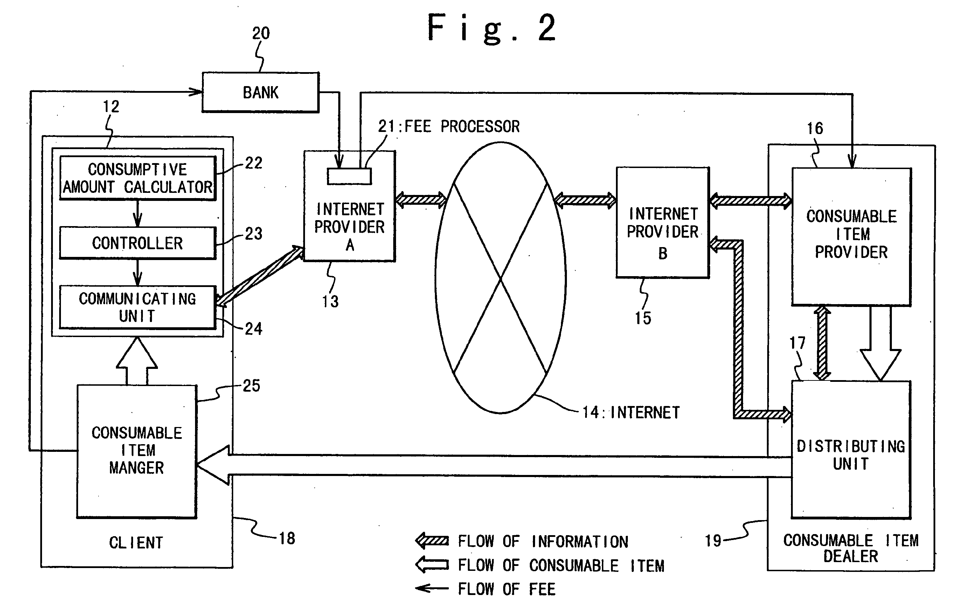

Fig. 2 shows a block diagram with regard to a distribution flow of the embodiment in the consumable item providing system of the present invention. The order of the consumable item transmitted by the information communicating unit 12 (belonging to a client 18) is transmitted through an Internet provider A13, an Internet 14 and an Internet provider B15 to a consumable item provider 16 of a consumable item dealer 19 and a distributing unit 17. The distributing unit 17 instantly carries out a procedure for ordering the consumable item if it has the stock of the consumable item. Then, the consumable item is shipped on the same day as the order or on the next day. The Internet provider A13 acts as a payer of a fee to the consumable item dealer 19. So, the client 18 can collectively carry out it together with a payment of an Internet relation contract to the Internet provider A13.

The configuration of the information communicating unit 12 will be described below in detail.

The information communicating unit 12 is a complex or usual facsimile, a complex or usual copier, a printer or the like. In this case, the consumable item is a recording paper, a toner, an ink and the like. And, it includes the consumptive amount calculator 22, the controller 23 and the communicating unit 24.

The consumptive amount calculator 22 has a function of holding an information of an initial stock amount of a consumable item consumed by itself, and on the other hand, periodically measuring a consumptive amount of the consumable item, and then calculating a current stock amount on the basis of the initial stock amount of the consumable item and the measured consumptive amount. It is provided with a consumable item consumption amount memory 1, a counter 2, a consumptive amount count result memory 3 and an initial consumable item consumption amount memory 4.

The consumable item consumption amount memory 1 has a unit for measuring the consumptive amounts of respective supplies consumed by itself. It periodically measures the consumptive amounts and stores the information of the consumptive amounts. Also, the consumable item consumption amount memory 1 has therein a clock function. The information of the consumptive amount is stored together with an information indicative of a date and hour when the consumptive amount is measured. A correspondence can be established between the consumptive amount and the time. By the way, all or a part of the respective units of the calculator 22 may have the clock function, respectively.

The counter 2 reads in a current stock amount of each consumable item stored in the consumptive amount count result memory 3 (described later), and a consumptive amount of each consumable item stored in the consumable item consumption amount memory 1, and calculates a difference between them. It is stored as the current stock amount in the consumptive amount count result memory 3.

The consumptive amount count result memory 3 stores the information with regard to the current stock amount. Then, the counter 2 periodically updates the value. This value is outputted to the controller 23 for each update, and it is used for a judgment of an automatic order.

The initial consumable item consumption amount memory 4 sets a total amount of a stock in a delivery of the consumable item. This information is inputted from an external portion in the delivery of the consumable item. At that time, an information of a date and hour of the delivery of the consumable item is inputted.

The controller 23 has a function of outputting a request of the consumable item if its current stock amount is less than a standard value, as for the current stock amount of the consumable item calculated by the calculator 22. The controller 23 is provided with a consumptive amount judgment standard memory 5, a consumption speed judgment standard memory 6, a judging unit 7, an order amount determining unit 8, a counter 9 and an order history memory 10.

The consumptive amount judgment standard memory 5 stores the amount serving as a judgment standard to judge whether or not each consumable item is ordered. The amount may be, for example, a necessary minimum stock amount of a preset consumable item, and an amount of each consumable item estimated to be used in a period until a next order after an order (determined with reference to a data until a previous delivery). By the way, a period until a delivery after the order of each consumable item and the like may be set as necessary.

The consumption speed judgment standard memory 6 calculates and stores a current consumption speed of each consumable item. As a method of calculating the consumption speed, it receives the amount of the supplies ordered at a previous time and a date and hour A from the order history memory 10 (described later) and a current date and hour B from the counter 9 (described later), respectively, and carries out the calculation under an assumption that the amount of the supplies ordered at the previous time is exhausted in a period of (B-A). That is, (Supply Consumption Speed = Ordered Amount of Supplies / (B-A)). Then, if the current consumption speed is faster than the consumption speed in the previous order, which is further received from the order history memory 10, it calculates an increased order amount corresponding to the fast consumption speed, and if the consumption speed is slower, it calculates a decreased order amount corresponding to the slow consumption speed, and reports the fact to the order amount determining unit 8. However, (Increased Or Decreased Order Amount = Amount of Supplies in Previous Order × (1 - Current Consumption Speed / Previous Consumption Speed)). If the answer is positive, it implies the increase, and if the answer is negative, it implies the decrease. By the way, the increased or decreased order amount can be set to be a multiple of a predetermined fixed value (if a minimum order amount implying a base of an order is already determined, its value).

The judging unit 7 responses to an output of the current stock amount with regard to each consumable item from the consumption amount count result memory 3, and receives a consumptive amount judgment standard value of each consumable item from the consumption amount judgment standard memory 5. It judges a presence or absence of a consumable item whose current stock amount is equal to or less than its standard value. In the present case, it outputs the result to the order amount determining unit 8. The judging method may be another method (described later).

The order amount determining unit 8 stores therein the data, such as a standard order amount of each consumable item, a model name, a client information and the like.

If there is an output from the judging unit 7, in order to automatically order the corresponding consumable item in response to the output, the order amount determining unit 8 receives the information with regard to an increase or decrease of a currently ordered amount based on a calculation of a consumption speed of the consumable item from the consumption speed judgment standard memory 6. It uses the data stored therein together with the information, and generates an order data, and then outputs the data to an Internet connecting unit 11 (described later).

The counter 9 responses to a request of an information of a date and hour from the consumption speed judgment standard memory 6, and outputs an information of a year, month, date and hour to the consumption speed judgment standard memory 6.

The order history memory 10 stores the order data outputted by the Internet connecting unit 11 (described later) when the consumable item is automatically ordered, and a consumption speed data used when it is ordered, and outputs the data in response to a request of an order history data from the consumption speed judgment standard memory 6.

The communicating unit 24 has a function of transmitting the data with regard to the automatic order of the consumable item from the controller 23, to the consumable item dealer 19. It is composed of the Internet connecting unit 11.

The Internet connecting unit 11 receives the order data with regard to the current order from the order amount determining unit 8 of the controller 23, and transmits the order data through the Internet to the consumable item dealer 19. Together with it, the Internet connecting unit 11 outputs the order data to the order history memory 10.

The configuration of the distribution block will be described below in detail with reference to Fig. 2.

With regard to a business of a consumable item, a contract with regard to a fee payment is concluded in advance between the client 18 and the Internet provider A13. Also, a contract with regard to a fee payment is concluded between the Internet provider A13 and the consumable item dealer 19. Moreover, a contract with regard to a fee payment and a contract in relation to an order, a shipment and the like of the consumable item (a kind of a consumable item to be serviced, the amount of supplies in a case of a collective order, an appointed delivery day and the like) are concluded between the client 18 and the consumable item dealer 19. By the way, those contracts may be jointly concluded between the three parties.

The client 18 has the information communicating unit 12 and a consumable item manger 25. The information communicating unit 12 itself automatically generates an order data of a lacking consumable item, and transmits it to the consumable item dealer 19 (a consumable item provider 16 (described later) and a distributing unit 17 (described later)).

The consumable item manger 25 has a server, a database and a device belonging to it, so as to carry out a process in relation to a consumable item management, such as a reception of a consumable item, a fee payment, a stock management, and the like. Then, it carries out a process for feeding the consumable item sent from the distributing unit 17 of the consumable item dealer 19 to the information communicating unit 12, and carries out a process for paying a fee of the consumable item.

The Internet provider A13 receives the order of the consumable item transmitted by the information communicating unit 12, and sends it through the Internet 14 and the Internet provider B15 to the consumable item provider 16 (described later) and the distributing unit 17 (described later) of the consumable item dealer 19 (described later).

Also, in the Internet provider A13, a fee processor 21, which is composed of a server, a database and a device belonging to it, so as to carry out the various fee processes, acts as a payer of a fee of the consumable item to the consumable item dealer 19 of the client 18.

The consumable item dealer 19 has a consumable item provider 16 (described later) and a distributing unit 17 (described later). They respond to an electronic business and can basically receive an order through the Internet at any time 24 hours a day. The consumable item provider 16 and the distributing unit 17 are connected to each other through the Internet.

The consumable item provider 16 has a server, a database and a device belonging to it, so as to carry out the various processes with regard to a provision of a consumable item. The consumable item provider 16 receives an order of the consumable item from the client 18 through the Internet, and carries out the various processes in relation to a reception, a shipment and the like, and also checks a consumable item stock amount in the distributing unit 17, and then carries out a process for delivering the consumable item to the distributing unit 17 as necessary. The distributing unit 17 has a server, a database and a device belonging to it, so as to carry out the various processes with regard to a distribution. The distributing unit 17 stores the stock of each consumable item, and receives the order of the consumable item from the client 18 through the Internet, and then carries out a process for directly delivering the consumable item of a predetermined amount to the client. The consumable item is shipped by the above-mentioned processes.

The fee processor 21 of the Internet provider A13 carries out a process for paying a consumable item fee and a contract fee in relation to the Internet from the client 18. The fee from the client 18 is paid by using an electronically settling manner through a bank 20. Then, the fee processor 21 acts as a payer of the consumable item fee to the consumable item dealer 19 from the client 18. Thus, the client 18 can simplify the process for paying the consumable item fee.

The operation of the consumable item providing system of the present invention will be described below in detail with reference to Figs. 1, 2.

At first, the information communicating unit 12 is described.

In the consumptive amount calculator 22, the consumable item consumption amount memory 1 periodically measures the respective consumptive amounts of the supplies (the recording paper, the toner, the ink and the like) consumed by itself. As the measuring method in the case of the recording paper, there is a method of counting the amount of actually used papers, a method of measuring a change in a weight of the recording papers, a method of detecting a change in a thickness of a flux of the recording papers or the like In the case of the toner, there is a method of determining a consumptive amount of the toner by previously defining the number of the papers that can be printed with one toner cartridge and then comparing it with the counted number of the papers, a method of measuring a change in a weight of the toner cartridge, a method of measuring a change in an electric conductivity of the toner cartridge, a method of measuring a black rate of characters and patterns printed on the recording papers, or the like. In the case of the ink, there is a method of measuring a change in a liquid level within an ink vessel, a method of measuring a change in a weight of the ink or the like.

An information of the measured consumptive amounts of the respective supplies is stored in the consumable item consumption amount memory 1. The information is stored together with a date and hour when the consumptive amounts are measured. A correspondence relation between the consumptive amounts and the time can be determined, and it is used by the counter 2 carrying out a consumable item stock amount check process.

The counter 2 periodically carries out the consumable item stock amount check process (hereafter, referred to as [Check Process]) by using the following method. At first, the counter 2 reads in the newest stock amount with regard to each consumable item stored in the consumption amount count result memory 3. Next, the counter 2 reads in the newest consumptive amount of each consumable item stored in the consumable item consumption amount memory 1. Then, the counter 2 calculates a difference between them (= Newest Stock Amount - Newest Consumptive Amount), and stores it as the newest (current) stock amount in the consumption amount count result memory 3. At this time, it is stored together with an information with regard to a date and hour when the check process is carried out (hereafter, referred to as [Date And Hour of Check Process]) as necessary.

When the information of the newest stock amount is updated, the consumption amount count result memory 3 outputs the updated newest stock amount to the judging unit 7 of the controller 23. It is outputted together with the information of the date and hour of the check process, as necessary.

As mentioned above, the consumptive amount calculator 22 periodically checks the stock amount of each consumable item, and stores its information while updating it, and then outputs to the controller 23.

By the way, in a case of a first check process for a stock amount immediately after a delivery of a consumable item, a total amount of a stock amount in a delivery of a consumable item stored in the initial consumable item consumption amount memory 4 is used as the newest stock amount in the consumption amount count result memory 3. Here, the total amount of the stock amount in the delivery of the consumable item implies a remaining amount of a stock amount immediately before the delivery of the consumable item plus an amount of the delivered consumable item. Also, the amount of the consumable item in the delivery at that time can be received through the Internet from the consumable item provider 16 and then inputted to the initial consumable item consumption amount memory 4.

The judging unit 7 in the controller 23 responds to the output of the current stock amount with regard to each consumable item from the consumption amount count result memory 3, and then judges whether or not each consumable item is a lacking state by using the following method.

At first, the judging unit 7 receives a consumptive amount judgment standard value of each consumable item from the consumption amount judgment standard memory 5. Then, the judging unit 7 compares the consumptive amount judgment standard value with the current stock amount of each consumable item obtained from the consumption amount count result memory 3. If the current stock amount is greater than the consumptive amount judgment standard value, the judging unit 7 does not carry out any process in particular. If it is equal to or less than the consumptive amount judgment standard value, the judging unit 7 outputs an information with regard to the consumable item to the order amount determining unit 8.

It can be judged by using the following method.

At first, the newest stock amount and the information of the date and hour of the check process with regard to each consumable item is outputted to the judging unit 7 from the consumption amount count result memory 3. In addition to it, the total amount of the stock in the delivery of the consumable item stored in the initial consumable item consumption amount memory 4 and the date and hour of the delivery of the consumable item are outputted. Then, the newest consumption speed of each consumable item is calculated. Here, (Newest Consumption Speed of Each Supply) = (Total Amount of Stock in Delivery of Supply - Newest Stock Amount) / (Date And Hour of Newest Check Process - Date And Hour in Delivery of Supply). After that, the minimum necessary amount of each consumable item until the delivery (hereafter, referred to as [Necessary Minimum Stock Amount]) is determined on the basis of the newest consumption speed of each consumable item and the period until the delivery after the order of each consumable item. That is, (Necessary Minimum Stock Amount) = ((Newest Consumption Speed) × (Period until Delivery after Order)). Then, that value is used as a standard value to compare it with the current stock amount of each consumable item. If the current stock amount is greater than the necessary minimum stock amount, the judging unit 7 does not carry out any process in particular. If the current stock amount is equal to or less than the necessary minimum stock amount, the judging unit 7 outputs the information of the consumable item to the order amount determining unit 8. By the way, the period until the delivery after the order is received from the consumption amount judgment standard memory 5.

Moreover, it can be judged by using the following method.

The judging unit 7 holds the newest stock amount and the check process time with regard to each consumable item outputted by the consumption amount count result memory 3 together with their previous data. Then, the judging unit 7 estimates the relation between the stock amount of each consumable item and the time, and represents it by using an equation and the like. Each consumable item is ordered on a date and hour in which the period until the delivery after the order of each consumable item is subtracted from a date and hour when the stock amount of each consumable item estimated in accordance with the equation is zero. Then, a value of a stock amount stocked on a date and hour of the order, which is estimated in accordance with the equation, is used as a standard value to then carry out a process for ordering each consumable item.

The estimation of the equation may be updated for each plurality of orders even if it is updated for each order. Also, as the estimating method, for example, there is a method of giving several approximate curves in advance and then estimating it by using a least squares method and the like.

If there is an output from the judging unit 7, the order amount determining unit 8 responds to the output, determines an order amount of the consumable item and the like by using the following procedure, and carries out the automatic order.

At first, the order amount determining unit 8 receives an information with regard to an increase or decrease in a current order amount based on a consumption speed computation of the consumable item from the consumption speed judgment standard memory 6. It calculates the current order amount on the basis of the information and a standard order amount of the consumable item held therein. After that, it generates an order data by using the information of the current order amount, a kind of the consumable item, a suitable model, a client information and the like. In order to automatically transmit the order, it outputs the order data to the Internet connecting unit 11 (described later) of the communicating unit 24.

In the communicating unit 24, the Internet connecting unit 11 receives the order data with regard to the current order from the controller 23 (order amount determining unit 8), and transmits the order data through the Internet to the consumable item dealer 19 (the consumable item provider 16 and the distributing unit 17). In addition to it, the Internet connecting unit 11 outputs the order data to the order history memory 10. It is connected to the Internet through the Internet provider A13.

The conventional work, in which the client independently checks the consumptive situation of the consumable item and then orders and purchases the consumable item, is not required by using the information communicating unit 12. That is, the unit itself counts the consumptive amount of the consumable item. Then, when it can be estimated that the remaining amount is reduced to an amount below a proper amount, the automatic order can be carried out both day and night 24 hours a day through the Internet. Thus, the purchase of the consumable item can be attained at a necessary timing without any stock of the excessive supplies. Also, in this information communicating unit 12, the order amount can be automatically increased or decreased on the basis of the consumptive situation of the consumable item. So, the order can be carried out in a substantially constant period. Hence, the efficiency of the distribution cost can be improved without any increase in the distribution cost caused by the increase in the number of delivery times.

The distribution block will be described below in detail with reference to Fig. 2.

In the client 18, the information communicating unit 12 outputs an order data of a consumable item. The order data is transmitted through the Internet provider A13 holding a contract with the client 18, and the Internet 14 and the Internet provider B15 to the consumable item provider 16 and the distributing unit 17 of the consumable item dealer 19. At this time, the order data is copied and reported to the fee processor 21 in the Internet provider A13. Here, the Internet provider B15 may be the server for the Internet of the consumable item dealer 19.

In the consumable item dealer 19, the consumable item provider 16 receives the order of the consumable item from the client 18 through the Internet, and executes the processes in relation to the distribution and the accounting, such as the reception of an order, the shipment, the demand for a payment and the like. In addition to them, the consumable item provider 16 checks the consumable item stock amount in the distributing unit 17. If it is equal to or less than a predetermined stock amount, the consumable item provider 16 executes a process for delivering the consumable item of a predetermined amount to the distributing unit 17. That is, the consumable item provider 16 carries out a process for requesting a delivering department (not shown) to send the lacking consumable item to the distributing unit 17.

On the other hand, the distributing unit 17 treats the order of the consumable item received from the client 18 through the Internet, on the basis of the order data and the client information. The distributing unit 17 executes a process for directly delivering to the client the consumable item of the amount based on the order data or the consumable item of the predetermined amount based on the contract. That is, the distributing unit 17 carries out the process for requesting the delivering department (not shown) to deliver the consumable item. This process enables the consumable item to be shipped to the client 18.

At this time, the order can be received by the distributing unit 17 through the Internet 24 hours a day. Thus, it is possible to improve the service and attain the effective business. If the distributing unit 17 has the stock, the ordering procedure of the consumable item is instantly carried out. The consumable item can be shipped on the same day as the order or the next day.

In the client 18, after the arrival of the consumable item, the consumable item manger 25 carries out a process for feeding it to the information communicating unit 12. That is, the consumable item manger 25 carries out a process for requesting a related department (not shown) to set the consumable item. This process enables the consumable item to be set in the information communicating unit 12. At this time, a total amount of a stock in the delivery of the consumable item and a date and hour of the delivery of the consumable item are inputted to the initial consumable item consumption amount memory 4.

When the fee in the purchase of the consumable item is paid and received, the Internet provider A13 instead of the client 18 pays the fee of the consumable item to the consumable item dealer 19, in accordance with the contract between the client 18 and the Internet provider A13, the contract between the Internet provider A13 and the consumable item dealer 19 and the like.

At first, the consumable item manger 25 executes a process for paying a fee after the arrival of the consumable item. That is, the consumable item manger 25 carries out a process for requesting a charged fee paying system (having a server and a data base so as to carry out a process in relation to a fee payment (not shown)) belonging to the client 18. The fee payment itself is carried out by a department responsible for the payment. The consumable item manger 25 itself can pay the fee. The payment is done through the bank 20 simultaneously with the payment of the contract fee in relation to the Internet to the Internet provider A13. A method is used such as a bank payment, an automatic payment or the like.

In the Internet provider A13, the fee processor 21 carries out a process for classifying the fee received from the client 18 and the like. In addition to it, the fee processor 21 carries out a process for paying the fee of the consumable item to the consumable item provider 17 of the consumable item dealer 19. Even in the business between the Internet provider A13 and the consumable item dealer 19, it is possible to use the method, such as the bank payment, the automatic payment or the like.

The consumable item provider 17 carries out a process for clearing the fee sent from the Internet provider A13 to a clearing process system (having a server and a database so as to carry out a process in relation to the fee clearing (not shown)) belonging to the consumable item dealer 19. This clearing process in the consumable item dealer 19 may be carried out by a department responsible for another fee clearing relation process.

This method enables the client 18 to treat the payment to the Internet provider A13 and the payment of the fee of the consumable item collectively and integrally. Thus, the side of the client 18 can omit a middle cost in the process.

The consumable item providing system of the present invention enables the consumable item dealer 19 to receive the order of the consumable item both day and night 24 hours a day through the Internet and automatically advance the shipping procedure. Thus, it can effectively provide the consumable item to the client 18 in the shortest delivery time.

Also, the consumable item dealer 19 can entrust the role of the shop for providing the consumable item to the client or the like, to the consumable item provider 16 connected to the Internet. Thus, it is not necessary to largely expand the shops and the like. Thus, it is possible to drop the cost simultaneously with the improvement of the service such as the quick consumable item shipment. So, this consumable item providing system has the following effects. That is, since the management to receive the order of the consumable item through the Internet can be singly done, it is possible to collectively grasp the single management of the client information and the shipment situation of the consumable item. Thus, it is easy to effectively plan a schedule in manufacturing the consumable item. Also, since the'unit installation timing in the client 18 and the usage situation can be grasped, a service to provide to the client the additionally valuable information such as an information provision to the client of a switching timing to a new model and the like.

Similarly to the above-mentioned embodiment, even in a typical office unit having the supplies as well as the information communicating unit, the addition of the device that can automatically counting the consumable item and the device that can communicate with the external portion of the unit enables the order of the consumable item to be reported through the Internet at a suitable timing, on the basis of a comparison between a consumptive situation of the consumable item of the apparatus and a stock amount of the consumable item via a communication line. Also, the device similar to that of the above explanation can be used to carry out the automatic order of the consumable item.

Also, in response to the automatic query from the consumable item provider 16 through the Internet, it is also possible to automatically transmit the information of the stock amount of the consumable item in the information communicating unit 12 of the client 18. In this case, in the information communicating unit 12, the Internet connecting unit 11 firstly receives the query, and it outputs the information to the judging unit 7. The judging unit 7, when receiving the information, outputs the current stock amount of each consumable item held therein. The Internet connecting unit 11 transmits the information to the consumable item provider 16.

Due to the above-mentioned configuration, the consumable item provider 16 can always keep the stock amount of the consumable item to be held in the distributing unit 17 of the consumable item provider 16 itself at the proper amount, in accordance with the information. Thus, there is no case of the lack of the stock in receiving the order of the consumable item. Also, the consumable item provider 16 itself can use it for a plan to manufacture the consumable item or purchase the consumable item from an external portion.

According to the consumable item providing system of the present invention, the information communicating unit of the client can automatically judge the order timing and the order amount of the consumable item, on the basis of the consumptive situation of the consumable item, and carry out the order through the Internet by itself.

Also, according to the consumable item providing system of the present invention, the consumable item dealer side can basically receive the order at any time of 24 times in a day, for the order through the Internet from the information communicating unit of the client.

Moreover, according to the consumable item providing system of the present invention, the client and the consumable item dealer can obtain the simple interface with regard to the consumable item business.

The present application claims priority under to Japanese Patent Application No. 2000-370708, filed on December 5, 2000, entitled "A consumable item providing system and a consumable item providing method ". The contents of that application are incorporated herein by reference in their entirety.

## Claims

1. A consumable item providing system, comprising:
an information communicating unit (12); and
a distributing unit (17) belonging to a consumable item dealer dealing a consumable item, and
wherein said information communicating unit (12) automatically transmits an order of said consumable item through the Internet (14) when a consumptive amount of said consumable item consumed by said information communicating unit (12) is equal to or less than a reference value, and
wherein said distributing unit (17) performs a process to distribute said consumable item to a transmission source of said order in response to said order, and
wherein said information communicating unit (12) is one of a facsimile, a copier, a printer, and an office unit.

2. The consumable item providing system according to Claim 1, wherein said information communicating unit (12) includes:
a consumptive amount calculating unit (22) having an initial information of an initial stock amount of a consumable item consumed by said information communicating unit (12) and measuring a consumptive amount of said consumable item to calculate a current stock amount of said consumable item based on said initial stock amount and said consumptive amount;
a controlling unit (23) responding to said current stock amount to output a consumable item information with regard to said consumable item when said current stock amount is equal to or less than a reference value; and
a communicating unit (24) connected to the Internet (14) transmitting and receiving said consumable item information.

3. The consumable item providing system according to Claim 2, wherein said controlling unit (23) controls an amount of said consumable item of said order which is transmitted next, based on a previous order information of said order which is transmitted previously and said consumable item information.

4. The system according to Claim 2 or 3, wherein said controlling unit (23) estimates a consumptive amount of said consumable item, based on a consumptive amount information of said measured consumptive amount and said initial information and a time information corresponding to said measured consumptive amount and said initial stock amount to set said reference value based on said estimated consumptive amount.

5. The system according to Claim 1, 2, 3 or 4, wherein said distributing unit (17) always receives said order using the Internet (14) without any temporal limitation.

6. The system according to Claim 1, 2, 3, 4 or 5, wherein a fee processor belonging to an Internet provider (13) acts as a payer of a fee for said consumable item.

7. A consumable item providing method, comprising:
(a) providing a information communicating unit (12);
(b) having an initial information of an initial stock amount of a consumable item consumed by said information communicating unit (12);
(c) measuring a consumptive amount of said consumable item;
(d) calculating a current stock amount of said consumable item based on said initial stock amount and said consumptive amount;
(e) responding to said current stock amount to output a consumable item information with regard to said consumable item when said current stock amount is equal to or less than a reference value; and
(f) connecting to the Internet to transmit and receive said consumable item information.

8. The consumable item providing method according to Claim 7, further comprising:
(g) estimating a consumptive amount of said consumable item, based on a consumptive amount information of said measured consumptive amount and said initial information and a time information corresponding to said measured consumptive amount and said initial stock amount; and
(h) setting said reference value based on said estimated consumptive amount.
